# EUROPEAN PATENT APPLICATION

(11) **EP 4 360 459 A1**
(43) Date of publication of application: **01.05.2024**
(21) Application number: 21947290.9
(22) Date of filing: 23.06.2021
(51) Int. Cl.: A21B 5/03, A21B 1/48

(54) **DEVICE FOR COOKING PANCAKES**

(71) Applicant: Obshchestvo S Ogranichennoj Otvetstvennostyu "Severnaya Inzhenernaya Kompaniya", Sankt-Peterburg, 191144 (RU)
(72) Inventor: DOLGUSHEV, Vladimir Anatolyevich, Sankt Peterburg, 191028 (RU); KUDRYAVCEV, Vasiliy Valentinovich, Sankt Peterburg, 191024 (RU); TOPILSKIY, Sergey Borisovich, Sankt Peterburg, 193068 (RU)
(74) Representative: Osmans, Voldemars
(86) International application number: PCT/RU2021/000265
(87) International publication number: WO 2022/271047

(57) **Abstract**

The invention relates to equipment for the food industry and can be used in the field of public catering, in particular for cooking products made of batter, such as pancakes. A device for making pancakes includes a cooker, a carriage with a slit shutter, and at least one manipulator represented by a belt conveyor equipped with a knife and configured for reciprocating movement along the cooker surface, with the belt rotating towards the suggested movement direction of the semi-finished pancake. The manipulator knife is configured for touching the cooker. The manipulator conveyor can have a twin configuration. The belt of the conveyor is meshed. The device can be provided with a shelf for stacking pancakes. The slit shutter can have different shapes and sizes. The technical result is a simple and reliable structure, and a concomitant broadening of the functional capabilities thereof

## Description

The invention relates to equipment for food industry and can be used in public catering, in particular, for making products of liquid dough, such as pancakes.

There are devices for making pancakes in which the baking process is fully automated, for example (RU 2588461). The device includes a cooking surface, a device for dough placement, devices for tumbling and stacking pancakes.

A disadvantage of this device is a complex design, which complicates its use in mobile food-service outlets.

There are devices for baking pancakes which are quite simple in design (RK-11 pancake-cooking device). The device includes a cooker, a dispensing carriage with a slit shutter where the dough container is installed.

A disadvantage of this device is that it is impossible to automatically tumble and stack pancakes.

The goal of the claimed invention is to create a design with a fully automated process of pancake cooking differing in simplicity and small size, which will allow using it in mobile food-service outlets.

The technical effect is a simple and reliable design with expanded functional capabilities.

This effect is achieved by the fact that the device for making pancakes includes a cooker, a dispensing carriage with a slit shutter and at least one manipulator represented by a belt conveyor equipped with a knife. The manipulator is configured for reciprocal movement along the cooker surface. This ensures simultaneous rotation of the conveyor belt always towards the suggested movement direction of the pancake semi-finished product.

Preferably the conveyor belt is meshed. The manipulator knife is adapted for touching the cooker surface. The device can be equipped with a shelf for pancake stacking. The slit shutter can be of various shapes and sizes. The manipulator can be twin.

Unlike the existing devices with automated process of pancake baking, the claimed device is much simpler and more reliable in manufacturing and operation. It uses a fixed cooking surface requiring no special drive and, therefore, excluding any faults inherent to known devices. Moreover, the claimed device is compact and can be used in mobile food-service outlets. Using the manipulator for tumbling, movement and stacking of pancakes is the advantage of the claimed device as compared to the known RK-11 device. Since the manipulator is twin, the performance of the device is high thanks to the reasonable use of the cooker surface.

In this manner, the claimed device is not only simple to manufacture and reliable in operation, but also has expanded functional capabilities. This is a compact and mobile device with a fully automated process of pancake baking.

The claimed invention is illustrated by graphic materials.

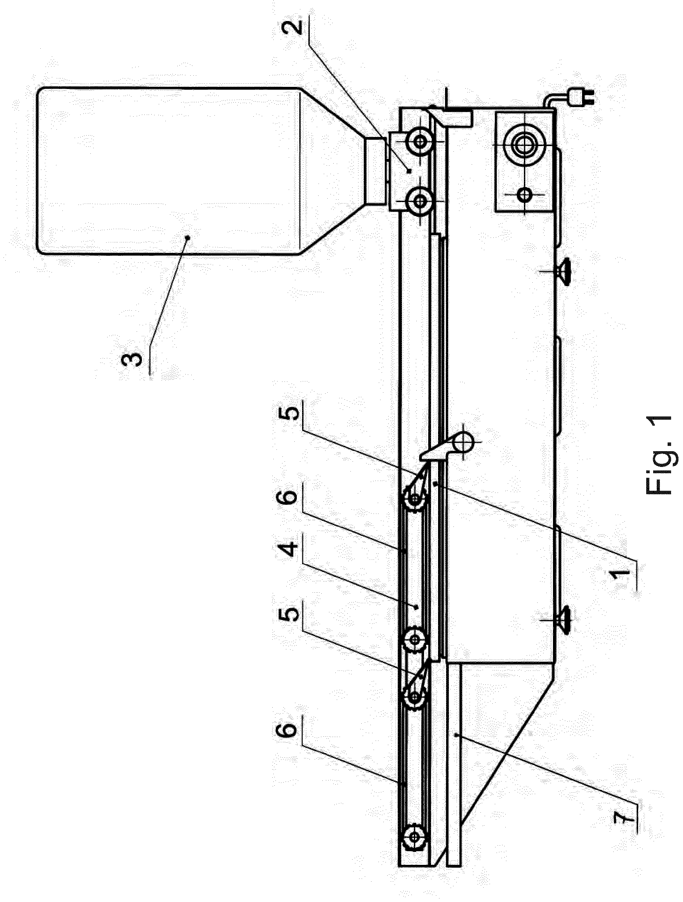

Fig. 1 represents an overview of the claimed device for making pancakes:

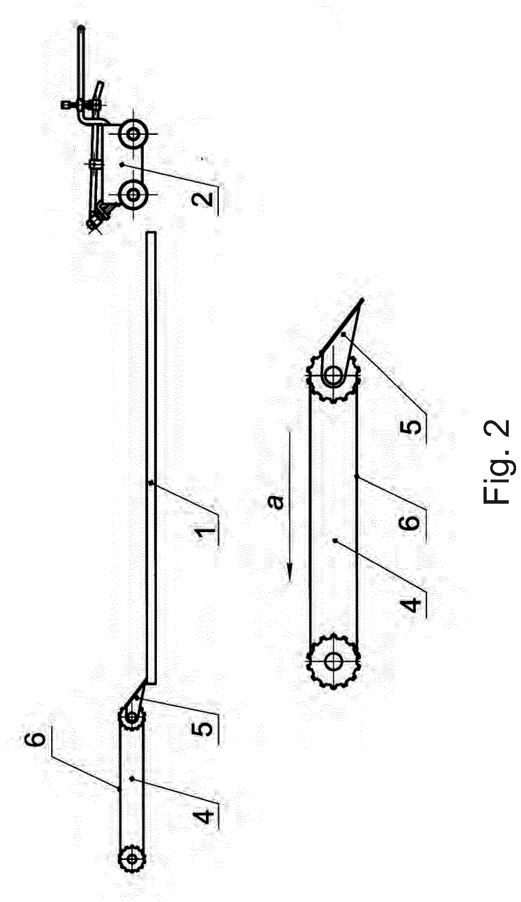

Fig. 2 shows the location of the manipulator and the carriage relative to the cooker before starting to cook pancakes;
Fig. 3 shows a carriage movement when applying and leveling the dough;
Fig. 4 shows removal of the dough product from the cooking surface by a translational movement of the manipulator equipped with a knife;
Fig. 5 shows tumbling of the semi-finished pancake on the non-fried side by a returning movement of the manipulator;
Fig. 6 shows movement of the finished pancake from the cooking surface to the manipulator's conveyor;

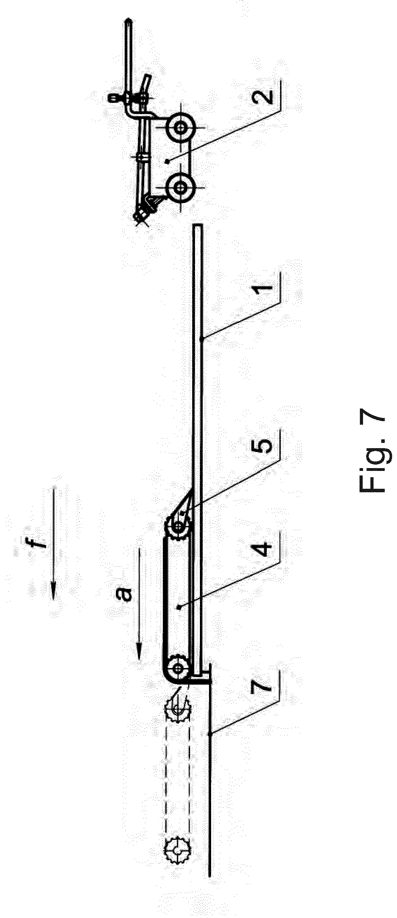

Fig. 7 shows the stacking of a finished pancake.

### Arrows:

*a* = direction of mesh movement
*b* = carriage working pass (dough application)
*c* = first direct movement of the manipulator (pancake removal)
*d* = first return movement of the manipulator (pancake tumbling)
*e* = second direct movement of the manipulator (finished pancake removal)
f = second return movement of the manipulator (finished pancake placement)

The device for baking pancakes comprises a flat cooker 1, preferably of rectangular shape, a carriage 2 with a slit shutter connected to the dough container 3 and intended for forming a semi-finished pancake (dough). Depending on the specific design of the slit shutter (its shape and size), the dough layer can be rectangular, round or otherwise. The device also includes at least one manipulator 4 representing a belt conveyor. The manipulator is equipped with a knife 5. The knife 5 of the manipulator 4 is designed to pry the semi-finished pancake and facilitate its removal and direct to the belt 6 of the conveyor that is preferably meshed. When the device moves to remove the pancake, the knife 5 goes down and touches the cooker surface, and when the carriage returns, the knife 5 goes up. The manipulator 4 is configured for reciprocal movement along the surface of the cooker 1. When the manipulator moves in a reciprocal manner along the cooker surface, the conveyor belt 6 must always rotate towards the suggested movement of the semi-finished pancake (to the left in the represented figure, e.g., counter-clockwise, pos. 1). The knife 5 of the manipulator 4 is configured for touching the surface of the cooker 1. Preferably, the device may be equipped with a shelf 7 for pancake stacking.

Preferably, the manipulator is twin so that two manipulators are attached to a single moving frame.

The claimed device for making pancakes operates as follows.

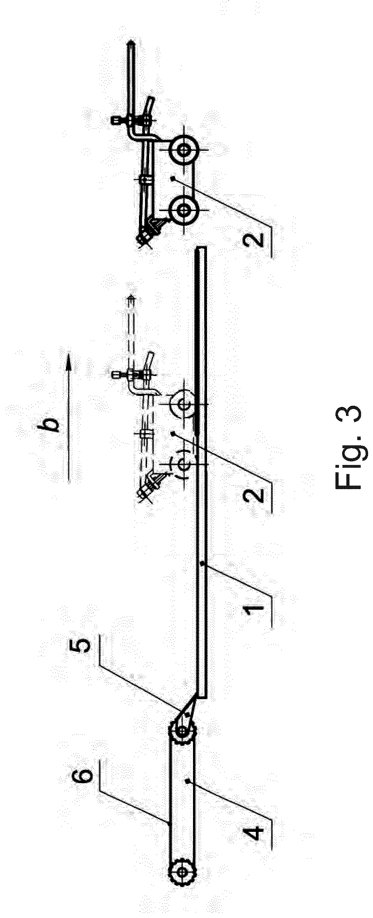

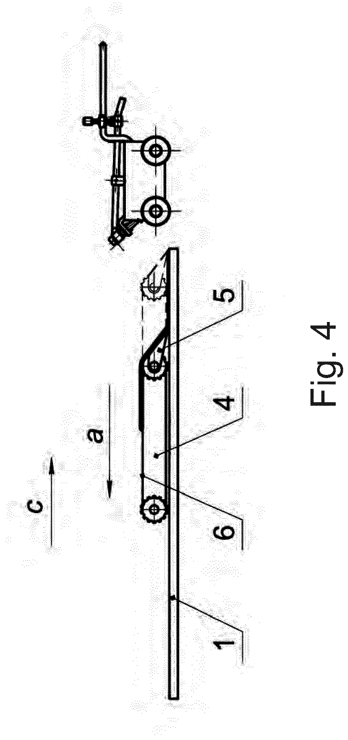

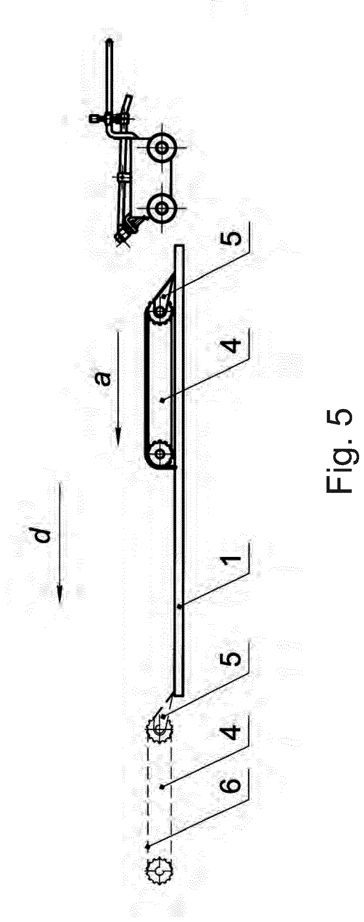

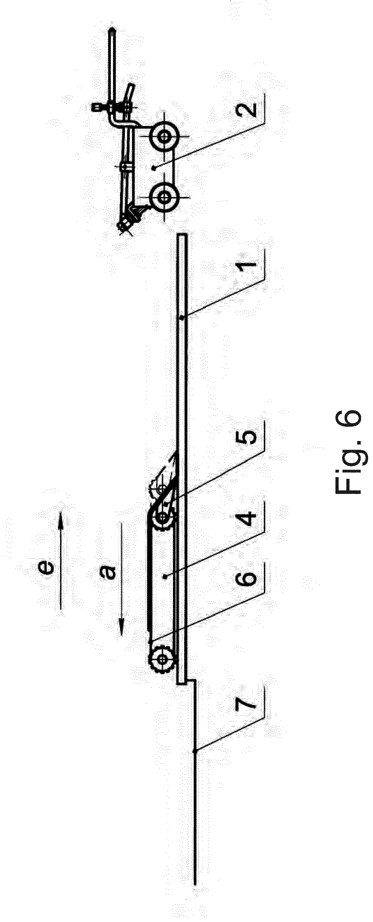

A dough layer is applied and levelled on the right side of the surface of the cooker 1 using the carriage 2 via the slit shutter (Fig. 3). After the time needed for frying is over, the manipulator 4 with the knife 5 moves in a reciprocal manner to remove the semi-finished pancake from the cooking surface and move to the conveyor belt 6 of the manipulator (Fig. 4). The returning movement (pos. *d*) of the manipulator 4 tumbles the semi-finished pancake on the non-fried side and places the semi-finished pancake on the left side of the cooking surface (Fig. 5). After the secondary frying, the manipulator 4 moves in a reciprocal manner (pos. e) to move the finished pancake to the conveyor belt 6 of the manipulator 4 (Fig. 6). The manipulator 4 returns (pos. /) to place the pancake on the shelf 7 for stacking. If the pancake is intended for further processing, it is fed from the manipulator to an additionally provided conveyor (not shown).

When the device operates, the manipulator moves to different distances, namely a full pass for removal and tumbling and a semi-lass for removal and stacking on the shelf 7.

To simplify the control in operative automation and reduce the production cycle, it is preferable to make the manipulator twin, e.g., when two manipulators are attached to a single movable frame. This allows moving the manipulator to equal distances (a semi-pass), which simplifies control and enhances performance of the device because it is possible to handle two semi-finished products simultaneously.

## Claims

1. A device for making pancakes including a cooker, a carriage with a slit shutter and at least one manipulator represented by a belt conveyor equipped with a knife and configured for reciprocal movement along the cooker surface, with the belt rotating towards the suggested movement direction of the semi-finished pancake.

2. The device according to claim 1 **characterized in that** the manipulator knife is configured for touching the cooker surface.

3. The device according to claim 1 **characterized in that** the manipulator conveyor is twin.

4. The device according to claim 1 **characterized in that** the conveyor belt is meshed.

5. The device according to claim 1 **characterized in that** it is equipped with a shelf for pancake stacking.

6. The device according to claim 1 **characterized in that** the slit shutter can be of various shapes and sizes.
